# EUROPEAN PATENT APPLICATION

(11) **EP 3 176 452 A1**
(43) Date of publication of application: **07.06.2017**
(21) Application number: 15826434.1
(22) Date of filing: 08.06.2015
(51) Int. Cl.: F16D 3/06

(54) **STRUCTURE FOR SHAFT, MALE MEMBER, AND FEMALE MEMBER**

(30) Priority: 31.07.2014 JP 2014156046
(71) Applicant: Nitta Corporation, Osaka-shi, Osaka 556-0022 (JP)
(72) Inventor: ISHIZAKI, Yoji, Yamatokoriyama-shi Nara 639-1085 (JP); KIYOHARA, Yoshiharu, Yamatokoriyama-shi Nara 639-1085 (JP); AOKI, Kenichiro, Yamatokoriyama-shi Nara 639-1085 (JP); DEI, Takehito, Yamatokoriyama-shi Nara 639-1085 (JP); AOKI, Yasuhiro, Yamatokoriyama-shi Nara 639-1085 (JP)
(74) Representative: Betten & Resch
(86) International application number: PCT/JP2015/066471
(87) International publication number: WO 2016/017280

(57) **Abstract**

A shaft structure installed in a shaft capable of making a power-transmission includes a male component having splines and spline bottoms on an outer periphery, a female component having splines and spline bottoms on an inner periphery and allows the male component to be slidably inserted in an axial direction thereby making up the shaft structure, and an elastic member covering the outer or inner periphery of the male or female component, wherein the female component has substantially U or V-shaped cross-section grooves on the outer periphery as opposed to splines, and a shape defined by the spline of the female component and the groove is such a shape that when the male or female component is twisted and a stress is applied to the spline in a direction around the shaft, the spline could be elastically deformed and absorb a maximum design stress within an elastic region.

## Description

### CROSS REFERENCE TO RELATED APPLICATIONS

This is a continuation application of International Patent Application No. PCT/JP2015/066471 filed on June 8, 2015 claiming priority upon Japanese Patent Application No. 2014-156046 filed on July 31, 2014, of which full contents are incorporated herein by reference.

### BACKGROUND OF THE INVENTION

### FIELD OF THE INVENTION

The present invention relates to a shaft structure to be installed in shafts used for various industrial machines, and a male component and a female component included in the shaft structure.

### DESCRIPTION OF THE BACKGROUND ART

Conventionally, it has been well known that a shaft structure having an elastic member made of fabric impregnated with rubber or resin interposed between an outer peripheral part of a male component and an inner peripheral part of a female component (see e.g. Patent Document 1 shown below).

### (Prior Art Documents)

### (Patent Documents)

Patent Document 1: Japanese Patent Application Publication No. 2014-025580

### (Problem to be Solved)

It is described in Patent Document 1, however, that, on the assumption that the metallic parts of the male component and/or the female component are rigid bodies, the effect of improvement in the reduction and the resistance with respect to tooth-hit noise generated during the operation has been obtained by virtue of such an elastic member; nevertheless, the resistance of the elastic member has deteriorated (i) if the elastic member is continuously subjected to a load to such an extent that the elastic member cannot fully absorb the load, and (ii) if an axis of the male and/or female component is caused to be eccentric and/or deflected so that a part of the elastic member is continuously subjected to an excessively large load.

### SUMMARY OF THE INVENTION

The objective of the present invention is to provide the shaft structure as well as the male and female components thereof, of which the resistance does not easily deteriorate even if (i) the elastic member interposed between an outer peripheral part of the male component and an inner peripheral part of the female component is continuously subjected to a load to such an extent that the elastic member cannot fully absorb the load, and even if (ii) an axis of the male and/or female component is caused to be eccentric and/or deflected so that a part of the elastic member is continuously subjected to an excessively large load.

### (Means for Solving Problems)

[1] As one aspect of the present invention, there is provided a shaft structure installed in a shaft capable of making a power-transmission including: a male component having a plurality of male spline parts and a plurality of male spline bottom parts formed on an outer peripheral part thereof; a female component having a plurality of female spline parts and a plurality of female spline bottom parts formed on an inner peripheral part thereof, the female component configured to allow the male component to be slidably inserted thereinto in an axial direction thereby making up said shaft structure; and an elastic member arranged on the male or female component such that a surface of the outer or inner peripheral part of the male or female component, respectively, is covered with the elastic member, wherein the female component has a plurality of substantially U or V-shaped cross-section grooves each formed on an outer peripheral part as opposed to each of the plurality of female spline parts, and a shape defined by each of the plurality of female spline parts and each of the plurality of grooves is configured such that, when the male or female component is twisted with respect to each other and the stress is applied to a female spline part as each of the plurality of female spline parts in a direction around the shaft, the female spline part could be elastically deformed as well as absorb a maximum design stress within an elastic region of the female spline part.
[2] As one aspect of the present invention, there is provided a female component installed in a shaft capable of making a power-transmission including: a plurality of female spline parts formed on an inner peripheral part thereof; a plurality of female spline bottom parts formed on an inner peripheral part thereof; and a plurality of substantially U or V-shaped cross-section grooves each formed on an outer peripheral part thereof as opposed to each interval between adjacent male spline parts out of a plurality of male spline parts formed on an outer peripheral part of a male component in an initial state where the male component is inserted thereinto, thereby making up a shaft structure, wherein a shape defined by each of the plurality of female spline parts thereof and each of the plurality of grooves is configured such that, when the male component or said female component is twisted with respect to each other and the stress is applied to a female spline part as each of the plurality of female spline parts thereof in a direction around the shaft, through an elastic member arranged so as to cover a surface of the outer peripheral part of the plurality of male spline parts and a plurality of male spline bottom parts formed along with the plurality of male spline parts, or a surface of the inner peripheral part of the plurality of female spline parts thereof and the plurality of female spline bottom parts thereof, the female spline part could be elastically deformed as well as absorb a maximum design stress within an elastic region of the female spline part.
   According to the construction of [1] and [2] above, in a state where the male component is inserted into the female component, when e.g. the male component is twisted in a peripheral direction with the rotation of the shaft, a force is transmitted to the female spline parts of the female component through the elastic member, and the female component is caused to rotate. When a load (torsional force) absorbable for the elastic member is applied to it, the elastic member is deformed so as to absorb a part of stress applied to the shaft by itself, and thereafter restores its original shape when the load (torsional force) disappears. On the other hand, when a large load (torsional force) not fully absorbable for the elastic member is applied to it, the elastic member is deformed but allows the load (torsional force) to be transmitted to a female spline part. In such a circumstance, the female spline part can be bent (elastically deformed) within the elastic region of material of the female component and restore its original shape when the load (torsional force) disappears. The stress applied to the elastic member can therefore be reduced by the deformation of the female spline part. When a large load (torsional force) not fully absorbable for the elastic member is applied to it with the rotation of the shaft, however, the stress concentrated on the elastic member can be distributed and reduced by the female spline part through the use of the elasticity of the material used as material of the female component.
   Furthermore, when an axis of the male component and/or the female component is eccentric and/or deflected (in a state where the axis of the male component does not match an axis of the female component; the same herein below) with the rotation of the shaft, and a force is transmitted to the female component through the elastic member, and a load (pressure) absorbable for the elastic member is applied to it, the elastic member is deformed so as to burden itself with stress. On the other hand, when the axis of e.g. the male component is eccentric and/or deflected and a large load (pressure) not absorbable for the elastic member is applied to it, the elastic member is deformed but allows the load (pressure) to be transmitted from a part of the inner peripheral part of the female component.
   As an example, when the male component is eccentric and allows the load (pressure) to be transmitted to the female spline part present in an eccentric direction of the axis of the male component, the load (pressure) is transmitted to the entire female spline part. In such a circumstance, the female spline part present in an eccentric direction of the axis of the male component and subjected to the transmitted load (pressure) can be bent (elastically deformed) within the elastic region of the material used as material of the female component, and a larger stress is applied to the female spline part in an eccentric direction than a female spline part present in an opposite direction of the female spline part. Furthermore, in such a circumstance, a large stress is also applied to the elastic member; however, the stress is reduced by the elastic deformation of the female spline part. The female spline part and the elastic member restore their original shape when the load (pressure) disappears.
   As another example, when the axis of the male component is deflected in relation to the axis of the female component so as to allow a load (pressure) to be transmitted to the female spline part present in a deflection direction of the axis of the male component, the load (pressure) is transmitted to the spline crest part of the female spline part in a distributed manner in a longitudinal direction. In such a circumstance, a large stress is also applied to the elastic member; however, the stress applied to the elastic member is reduced by the bending (elastic deformation) of the female spline part in a distributed manner in a longitudinal direction within the elastic region of the material used as material of the female component around a part of the spline crest part of the female spline part of the female component subjected to the transmitted load (pressure). The elastic member and the female spline part restore their original shape when the load (pressure) disappears. It is possible therefore to reduce the stress applied to the elastic member by the deformation of the female spline part. The same effect is obtained when the axis of the female component is eccentric and/or deflected.
   As a result, when the axis of the male component and/or the female component is eccentric and/or deflected, and a large load (pressure) not fully absorbable for the elastic member is applied to it, the stress concentrated on the elastic member can be distributed and reduced (absorbed) by the female spline part through the use of the elasticity of the material used as material of the female component. In other words, the stress (deformation amount) applied to the elastic member generated when the male component is twisted in a peripheral direction and the axis of the male component and/or the female component is eccentric and/or deflected can be reduced by the deformation of the female spline part.
   As a consequence, this elastic member can be extended in service life in comparison with the conventional elastic member. In other words, it is possible to provide a shaft structure and a female component whose durability of elastic member does not easily deteriorate.
[3] As another aspect of the present invention, there is provided a shaft structure installed in a shaft capable of making a power-transmission including: a male component having a plurality of male spline parts and a plurality of male spline bottom parts formed on an outer peripheral part thereof, and having a hollow part formed therein; a female component having a plurality of female spline parts and a plurality of female spline bottom parts formed on an inner peripheral part thereof, the female component configured to allow the male component to be slidably inserted thereinto in an axial direction thereby making up said shaft structure; and an elastic member arranged on the male or female component such that a surface of the outer or inner peripheral part of the male or female component, respectively, is covered with the elastic member, wherein the male component has, in the hollow part, a plurality of substantially U or V-shaped cross-section grooves each shaped so as to converge from a hollow part side toward a spline crest part of each of the plurality of male spline parts, and a shape defined by each of the plurality of male spline parts and each of the plurality of grooves is configured such that, when the male or female component is twisted with respect to each other and the stress is applied to a male spline part as each of the plurality of male spline parts in a direction around the shaft, the male spline part could be elastically deformed as well as absorb a maximum design stress within an elastic region of the male spline part.
[4] As another aspect of the present invention, there is provided a male component installed in a shaft capable of making a power-transmission including: a plurality of male spline parts formed on an outer peripheral part thereof; a plurality of male spline bottom parts formed on an outer peripheral part thereof; a hollow part formed therein; and a plurality of substantially U or V-shaped cross-section grooves each shaped so as to converge from a hollow part side toward a spline crest part of each of the plurality of male spline parts, in the hollow part, thereof, wherein a shape defined by each of the plurality of male spline parts thereof and each of the plurality of grooves is configured such that, when said male component or a female component is twisted with respect to each other from an initial state where said male component is inserted into the female component, thereby making up a shaft structure, and the stress is applied to a male spline part as each of the plurality of male spline parts thereof in a direction around the shaft, through an elastic member arranged so as to cover a surface of the outer peripheral part of the plurality of male spline parts thereof and the plurality of male spline bottom parts thereof, or a surface of an inner peripheral part of a plurality of female spline parts of the female component and a plurality of female spline bottom parts formed along with the plurality of female spline parts, the male spline part could be elastically deformed as well as absorb a maximum design stress within an elastic region of the male spline part.
   According to the construction of [3] and [4] above, in a state where the male component is inserted into the female component, when e.g. the male component is twisted in a peripheral direction with the rotation of the shaft, a force is transmitted to the female component through the elastic member, and the female component is caused to rotate. When a load (torsional force) absorbable for the elastic member is applied from the male component to the elastic member, the elastic member is deformed so as to absorb a part of the stress applied to the shaft, and thereafter restores its original shape when the load (torsional force) disappears. On the other hand, when a large load (torsional force) not fully absorbable for the elastic member is applied to it, the elastic member is deformed but allows the load (torsional force) to be transmitted to the male spline part as a reactive force. In such a circumstance, the male spline part can be bent (elastically deformed) within the elastic region of the material used as material of the male component and restore its original shape when the load (torsional force) disappears. The stress applied to the elastic member can therefore be reduced by the deformation of the male spline part. When a large load (torsional force) not fully absorbable for the elastic member is applied to it with the rotation of the shaft, however, the stress concentrated on the elastic member can be distributed and reduced by the male spline part through the use of the elasticity of the material used as material of the male component.
   Furthermore, when an axis of the male component and/or the female component is eccentric and/or deflected with the rotation of the shaft, and a force is transmitted to the male component and/or the female component through the elastic member, and a load (pressure) absorbable for the elastic member is applied to it, the elastic member is deformed so as to absorb a part of the stress applied to the shaft and restores its original shape when the load (torsional force) disappears. On the other hand, when the axis of e.g. the male component is eccentric and/or deflected and a large load (pressure) not absorbable for the elastic member is applied to it, the elastic member is deformed but allows a part of the load (pressure) to be transmitted to the female component, and a part of the load (pressure) is transmitted from a part of the outer peripheral part of the male component as a reactive force. More specific example of transmission of the load (pressure) will be described.
   As an example, a larger stress is applied to the male spline part present in an eccentric direction than the stress applied to a male spline part present in an opposite direction of the male spline part. In such a circumstance, a large stress is also applied to the elastic member; however, the stress is reduced by the elastic deformation of the male spline part. The male spline part and the elastic member restore their original shape when the load (pressure) disappears.
   As another example, when the axis of the male component is deflected in relation to an axis of the female component, and a load (pressure) is transmitted to the spline crest part of the male spline part present in a deflection direction of the axis of the male component, the load (pressure) is transmitted to the spline crest part of the male spline part in a distributed manner in a longitudinal direction. In such a circumstance, a large stress is also applied to the elastic member; however, the stress applied to the elastic member is reduced by the bending (elastically deformed) of the male spline part in a distributed manner in a longitudinal direction within the elastic region of the material used as material of the male component around a part of the spline crest part of the male spline part subjected to the transmitted load (pressure). The elastic member and the male spline part restore their original shape when the load (pressure) disappears. It is possible therefore to distribute and reduce a part of the stress applied to the shaft by the elastic member and the male spline part. The same effect is obtained when the axis of the female component is eccentric and/or deflected.
   As a result, when the axis of the male component and/or the female component is eccentric and/or deflected, and a large load (pressure) not fully absorbable for the elastic member is applied to it, the stress concentrated on the elastic member can be distributed and reduced by the male spline part through the use of the elasticity of the material used as material of the male component. In other words, the stress (deformation amount) applied to the elastic member generated when the male component is twisted in a peripheral direction and the axis of the male component and/or the female component is eccentric and/or deflected can be reduced by the deformation of the male spline part.
   As a consequence, the elastic member can be extended in service life in comparison with the conventional elastic member. In other words, it is possible to provide a shaft structure and a male component in whose durability of the elastic member does not easily deteriorate.
[5] As still another aspect of the present invention, there is provided a shaft structure installed in a shaft capable of making a power-transmission including: a male component having a plurality of male spline parts and a plurality of male spline bottom parts formed on an outer peripheral part thereof; a female component having a plurality of female spline parts and a plurality of female spline bottom parts formed on an inner peripheral part thereof, the female component configured to allow the male component to be slidably inserted thereinto in a radial direction thereby making up said shaft structure; and an elastic member arranged on the male or female component such that a surface of the outer or inner peripheral part of the male or female component, respectively, is covered with the elastic member, wherein the male component has a plurality of substantially U or V-shaped cross-section grooves each shaped so as to converge from a spline crest part toward a central part in a radial direction of each of the plurality of male spline parts, and a shape defined by each of the plurality of male spline parts and each of the plurality of grooves is configured such that, when the male or female component is twisted with respect to each other and the stress is applied to a male spline part as each of the plurality of male spline parts in a direction around the shaft, the male spline part could be elastically deformed as well as absorb a maximum design stress within an elastic region of the male spline part.
[6] As still another aspect of the present invention, there is provided a male component installed in a shaft capable of making a power-transmission including: a plurality of male spline parts formed on an outer peripheral part thereof; a plurality of male spline bottom parts formed on an outer peripheral part thereof; and a plurality of substantially U or V-shaped cross-section grooves each shaped so as to converge from a spline crest part to a central part in a radial direction of each of the plurality of male spline parts, in the hollow part, thereof, wherein a shape defined by each of the plurality of male spline parts thereof and each of the plurality of grooves is configured such that, when said male component or a female component is twisted with respect to each other from an initial state where said male component is inserted into the female component, thereby making up a shaft structure, and the stress is applied to a male spline part as each of the plurality of male spline parts thereof in a direction around the shaft, through an elastic member arranged so as to cover a surface of the outer peripheral part of the plurality of male spline parts thereof and the plurality of male spline bottom parts thereof, or a surface of an inner peripheral part of a plurality of female spline parts of the female component and a plurality of female spline bottom parts formed along with the plurality of female spline parts, the male spline part could be elastically deformed as well as absorb a maximum design stress within an elastic region of the male spline part.

According to the construction of [5] and [6] above, in a state where the male component is inserted into the female component, when e.g. the male component is twisted in a peripheral direction with the rotation of the shaft, a force is transmitted to the female component through the elastic member, and the female component is caused to rotate. When a load (torsional force) absorbable for the elastic member is applied from the male component to the elastic member, the elastic member is deformed so as to absorb a part of the stress applied to the shaft by itself, and thereafter restores its original shape when the load (torsional force) disappears. On the other hand, when a large load (torsional force) not fully absorbable for the elastic member is applied to it, the elastic member is deformed but allows the load (torsional force) to be transmitted to a side portion of the male spline part as a reactive force. In such a circumstance, the male spline part can be bent (elastically deformed) in a peripheral direction within the elastic region of the material used as material of the male component and restore its original shape when the load (torsional force) disappears. The stress applied to the elastic member can therefore be reduced by the deformation of the male spline part. When a large load (torsional force) not fully absorbable for the elastic member is applied to it with the rotation of the shaft, however, the stress concentrated on the elastic member can be distributed and reduced by the male spline part through the use of the elasticity of the material used as material of the male component.
Furthermore, when an axis of the male component and/or the female component is eccentric and/or deflected with the rotation of the shaft, and a force is transmitted to the male component and/or the female component through the elastic member, and a load (pressure) absorbable for the elastic member is applied to it, the elastic member is deformed so as to absorb a part of the stress applied to the shaft and restores its original shape when the load (torsional force) disappears. On the other hand, when the axis of e.g. the male component is eccentric and a large load (pressure) not absorbable for the elastic member is applied to it, the elastic member is deformed but allows a part of the load (pressure) to be distributed around a part of the outer peripheral part of the female component.
As an example, a larger stress is applied to the male spline part present in an eccentric direction than the stress applied to a male spline part present in an opposite direction of the male spline part. In such a circumstance, a large stress is also applied to the elastic member; however, the stress is reduced by the elastic deformation of the male spline part. The male spline part and the elastic member restore their original shape when the load (pressure) disappears.
As another example, when the axis of the male component is deflected in relation to an axis of the female component, and a load (pressure) is transmitted to the spline crest part of the male spline part present in a deflection direction of the axis of the male component, the load (pressure) is transmitted to the spline crest part of the male spline part in a distributed manner in a longitudinal direction. In such a circumstance, a large stress is also applied to the elastic member; however, the stress applied to the elastic member is reduced by the bending (elastically deformed) of the male spline part in a distributed manner in a longitudinal direction within the elastic region of the material used as material of the male component around a part of the spline crest part of the male spline part subjected to the transmitted load (pressure). The elastic member and the male spline part restore their original shape when the load (pressure) disappears. It is possible therefore to reduce the stress applied to the shaft by the elastic member. The same effect is obtained when the axis of the female component is eccentric and/or deflected.
As a result, when the axis of the male component and/or the female component is eccentric and/or deflected, and a large load (pressure) not fully absorbable for the elastic member is applied to it, the stress concentrated on the elastic member can be distributed and reduced by the male spline part through the use of the elasticity of the material used as material of the male component. In other words, the stress (deformation amount) applied to the elastic member generated when the male component is twisted in a peripheral direction and the axis of the male component and/or the female component is eccentric and/or deflected can be reduced by the deformation of the male spline part.
As a consequence, the elastic member can be extended in service life in comparison with the conventional elastic member. In other words, it is possible to provide a shaft structure and a male component in whose durability of the elastic member does not easily deteriorate.

### BRIEF DESCRIPTION OF THE DRAWINGS

For more thorough understanding of the present invention and advantages thereof, the following descriptions should be read in conjunction with the accompanying drawings in which:
FIG. 1 depicts an example of schematic diagram of an electric power steering device applied with a shaft structure as a first embodiment of the present invention.
FIG. 2A depicts an exploded perspective view showing an example of male component as one of main parts of the shaft structure as the first embodiment of the present invention.
FIG. 2B depicts an exploded perspective view showing an example of female component as another of main parts of the shaft structure as the first embodiment of the present invention.
FIG. 2C depicts an exploded perspective view showing an example of elastic member, which is to be arranged on an outer peripheral part of the male component, as still another of main parts of the shaft structure as the first embodiment of the present invention.
FIG. 3 depicts a cross-sectional view of the shaft structure shown in FIGS. 2A to 2C.
FIG. 4A depicts an exploded perspective view showing an example of male component as one of main parts of the shaft structure as a second embodiment of the present invention.
FIG. 4B depicts an exploded perspective view showing an example of female component as another of main parts of the shaft structure as the second embodiment of the present invention.
FIG. 4C depicts an exploded perspective view showing an example of elastic member, which is to be arranged on an outer peripheral part of the male component, as still another of main parts of the shaft structure as the second embodiment of the present invention.
FIG. 5 depicts a cross-sectional view of the shaft structure shown in FIGS. 4A to 4C.
FIG. 6A depicts an exploded perspective view showing an example of male component as one of main parts of the shaft structure as a third embodiment of the present invention.
FIG. 6B depicts an exploded perspective view showing an example of female component as another of main parts of the shaft structure as the third embodiment of the present invention.
FIG. 6C depicts an exploded perspective view showing an example of elastic member, which is to be arranged on an outer peripheral part of the male component, as still another of main parts of the shaft structure as the third embodiment of the present invention.
FIG. 7 depicts a cross-sectional view of the shaft structure shown in FIGS. 2A to 2C.
FIG. 8 depicts a cross-sectional view of a shaft structure according to a fourth embodiment of the present invention.

### DESCRIPTION OF EMBODIMENTS OF THE INVENTION

### [First Embodiment]

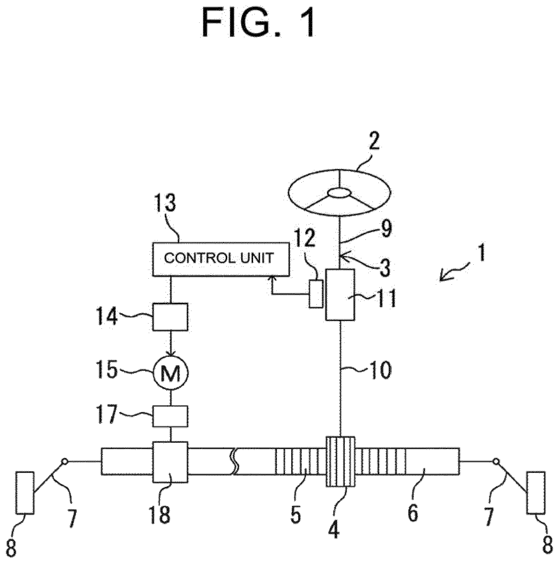

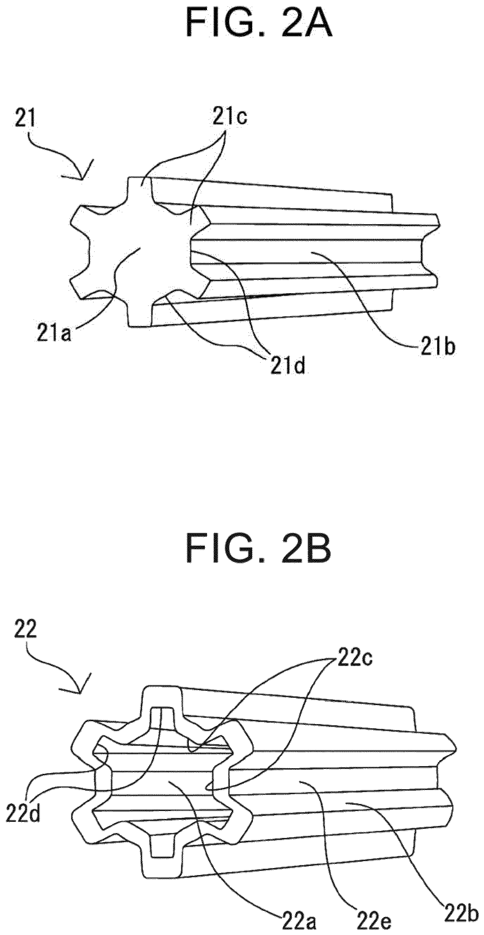

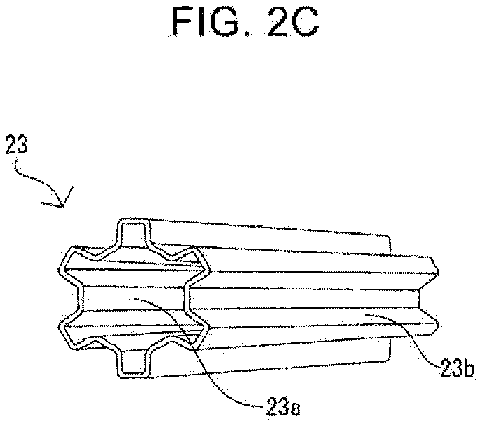

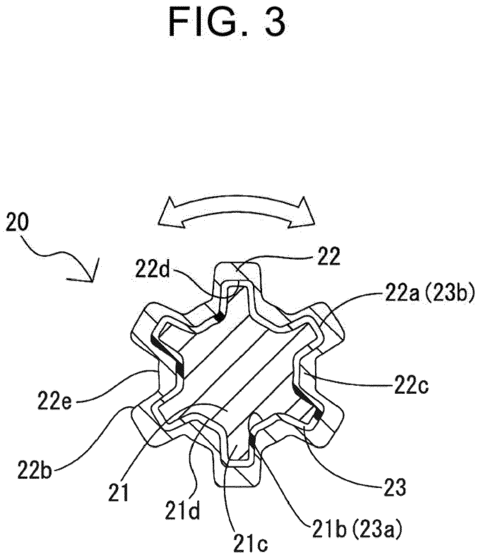

Hereinafter, a shaft structure (spline) as well as a male component (male spline shaft) and a female component (female spline shaft), both components making up the shaft structure, in a first embodiment of the present invention will be described with reference to FIGS. 1 to 3. FIG. 1 depicts an example of schematic diagram of an electric power steering device applied with a shaft structure as a first embodiment of the present invention. FIGS. 2A to 2C depict an exploded perspective view showing an example of main parts of the shaft structure as a first embodiment of the present invention, of which: FIG. 2A shows an example of male component; FIG. 2B shows an example of female component; and FIG. 2C shows an example of elastic member interposed between the male component and the female component. FIG. 3 depicts a cross-sectional view of the shaft structure as a first embodiment according to the present invention.

### (Outlined structure of electric power steering device)

Explanations about the elements of an electric power steering device along with further explanations about the operation of such a device will be provided here. As shown in FIG. 1, the electric power steering device (EPS) 1 includes: a steering shaft (shaft) 3 connected to a steering wheel 2 as a steering component; and a rack shaft 6 having a pinion gear 4 disposed on an end of the steering shaft 3 and a rack gear 5 engaged with the pinion gear 4, where the rack shaft 6 can serve as a steering shaft extended in a lateral direction of the vehicle.

The rack shaft 6 has tie rods 7 connected to both ends thereof, respectively, and the tie rods 7 are connected to their respective wheels 8 through their respective knuckle arms (not shown). When the steering wheel 2 is manipulated so as to cause the steering shaft 3 to rotate, the rotational motion of the steering shaft 3 is converted by the pinion gear 4 and the rack gear 5 to the translational motion of the rack shaft 6 in a lateral direction of the vehicle. As a result, the steering of the wheels 8 can be thus achieved.

The steering shaft 3 is separated into an input shaft 9 connected to the steering wheel 2 and an output shaft 10 connected to the pinion gear 4. Such input/output shafts 9, 10 are coupled to each other through a torsion bar 11 along the same axis. Further, a torque sensor 12 is provided so as to detect steering torque on the basis of an amount of relative rotational displacement between the input and output shafts 9, 10 with respect to the torsion bar 11 interposed therebetween, and output torque-detection results obtained by the torque sensor 12 to a control unit 13. On the basis of: torque-detection results obtained by the torque sensor 12; vehicle-speed-detection results; and the like, the control unit 13 controls a driver 14 so as to adjust a voltage applied to an electric motor 15 for assistance in steering. Still further, the rotation of a rotary shaft (not shown) in the electric motor 15 is decreased in speed through a speed reducer 17. The outputted rotational motion of the speed reducer 17 is converted through a converter 18 to the translational motion of the rack shaft 6 in an axial direction, thereby resulting in assistance in steering. This electric power steering device 1 is that of the so-called rack assist type.

### (Structure of shaft structure)

The shaft structure 20 in this embodiment is applied to e.g. the steering shaft 3 described above (hereinafter, occasionally referred to as "shaft 3" for short).

The shaft structure 20 according to the present invention is installed on a shaft 3 capable of making a power-transmission. The male and female components capable of making a power-transmission are configured such that the male component is slidably inserted into the female component in an axial direction, thereby making up such a shaft structure 20. The shaft structure 20 includes a metallic male component 21, a metallic female component 22, and an elastic member 23 interposed between the male component 21 and the female component 22, where examples of metal used for the male component 21 and the female component 22 include iron, aluminum, stainless steel, and the like.

As shown in FIG. 2A, the male component 21 has e.g. six male spline parts 21 c arranged adjacent to each other with a predetermined gap therebetween.

As shown in FIG. 2B, the female component 22 has female spline parts 22c configured to fit with the male components 21 through the elastic member 23 interposed therebetween. Furthermore, as shown in FIG. 2B, a substantially U or V-shaped cross-section groove 22e is formed on an outer peripheral part of all the six female spline parts 22c of the female component 22. The female spline part 22c and the groove 22e form such a shape that, when e.g. the male component 21 is twisted around the shaft 3 with the rotation of the shaft 3 in a state where the male component 21 is inserted into the female component 22, (1) such a large load (torsional force) not fully absorbable for the elastic member 23 is applied to the elastic member 23, and (2) the axis of the male component 21 and/or the female component 22 is eccentric and/or deflected (a state where the axis of the male component 21 does not match the axis of the female component 22), and such a large load not absorbable for the elastic member 23 is applied to only a part of the elastic member 23, the female spline part 22c and the groove 22e can be elastically deformed and a largest design stress can be absorbed within an elastic region of the female spline part 22c.

The elastic member 23 can be made of rubber. As such types of rubber, the followings may be used in a neat form or in a form denatured in various ways: e.g., urethane rubber, nitrile rubber (NBR), silicon rubber, fluororubber, acrylic rubber, ethylene-propylene rubber, butyl rubber, isoprene rubber, chlorinated polyethylene rubber, epichlorohydrin rubber, hydrogenated nitrile rubber, chloroprene rubber, polybutadiene rubber, styrene-butadiene rubber, natural rubber, and the like. Each of these types of rubber may be used alone, or a plurality of types of rubber selected therefrom may be used in a blended form.

It is preferable that the elastic member 23 is made of fabric impregnated with rubber or resin. The fabric may be made of, e.g., aramid fiber, nylon, urethane, cotton, silk, linen, acetate, rayon, fluorine-containing fiber, polyester, and the like, which are impregnated with rubber or resin. The fabric may be made of e.g. short fibers or long fibers, and may also be a sheet-like fabric.

By virtue of impregnating fibers with rubber or resin, rubber material or resin material is enabled to fill the gaps among the fibers and bond the fibers together, thereby allowing the fibers to serve as a component (sheet body) like the elastic member 23. Further, by adopting fibers impregnated with rubber or resin as the elastic member 23, the wear caused by friction between the fibers can be reduced, and still further, the resistance to wear on the surface of the elastic member 23 caused by friction between the elastic member 23 and the male component 21 or the elastic member 23 and the female component 22 can be improved.

As rubber to be subjected to impregnation processing, the followings may be used in a neat form or in a form denatured in various ways: e.g., urethane rubber, nitrile rubber (NBR), silicon rubber, fluororubber, acrylic rubber, ethylene-propylene rubber, butyl rubber, isoprene rubber, chlorinated polyethylene rubber, epichlorohydrin rubber, hydrogenated nitrile rubber, chloroprene rubber, polybutadiene rubber, styrene-butadiene rubber, natural rubber, and the like. Each of these types of rubber may be used alone, or a plurality of types of rubber selected therefrom may be used in a blended form. Further, the rubber may contain appropriate amounts of traditional compounding ingredients for rubber, such as vulcanizing agent, vulcanizing accelerator, antioxidant, softener, plasticizer, filler, colorant, and the like as well as solid lubricants such as graphite, silicone oil, fluorine powder, molybdenum disulfide, or the like for enhancing the lubricity of the elastic member 23. Still further, the above types of rubber may be replaced by or combined with thermoplastic or thermosetting resin such as acrylic resin, polyester resin, urethane resin, vinyl chloride resin, polypropylene, polycarbonate, polyethylene terephthalate resin, fluorine resin, polyethylene, acrylonitrile-styrene resin, acrylonitrile-butadiene-styrene resin, polystyrene resin, polyvinyl chloride, polyvinylidene chloride, polyvinyl acetate, nylon, alkyd resin, phenolic resin, epoxy resin, polyphenylene sulfide resin, and the like.

When impregnating fibers with rubber or resin as described above, it is preferable that the rubber or resin be dissolved by a solvent or another means into a liquid state before dipping the predetermined fibers (short or long fibers) in the liquid. In practice, the sheet-like fabric made of the fibers may be used. This fabric is impregnated with rubber or resin in the same way as described above.

The fabric may be, e.g., non-woven fabric made of irregularly tangled fibers, regularly-formed woven, knitted fabric, and the like. These fabrics are characterized by facilitating impregnation (easier handling) with rubber and the like, and further facilitating adhesion to the surface of the shaft structure described below in comparison with those made of fibers (short or long fibers) only, because these fabrics are in sheet form. The woven fabric may be made in a plain weave, satin weave, twill weave, or the like.

The fabric may preferably be stretchy to some extent. By virtue of such stretchiness, when the fabric is formed so as to be in line with the male spline parts 21 c or female spline parts 22c in shape, or when the fabric is adhered to a surface of the outer peripheral part 21 b of the male component 21 and a surface of the inner peripheral part 22a of the female component 22, there can be achieved the advantageous effects that a surface of the stretchy fabric can easily be shaped in accordance with any concave-convex formed surfaces, and the resultant elastic member 23 has the surface subjected to few creases and uniformly finished.

As shown in FIG. 2C, the elastic member 23 has an inner peripheral part 23a substantially the same in shape as the outer peripheral part 21b of the male component 21 and an outer peripheral part 23b substantially the same in shape as the inner peripheral part 22a of the female component 22. As a method of interposing the elastic member 23 between the outer peripheral part 21b of the male component 21 and the inner peripheral part 22a of the female component 22, the elastic member 23 may be adhered to any one of the outer peripheral part 21b of the male component 21 and the inner peripheral part 22a of the female component 22. The adhesive used here may be, e.g., acrylic resin adhesive, olefin adhesive, urethane resin adhesive, ethylene-vinyl acetate resin adhesive, epoxy resin adhesive, vinyl chloride resin adhesive, chloroprene rubber adhesive, cyanoacrylate adhesive, silicon adhesive, styrene-butadiene rubber adhesive, nitrile rubber adhesive, hot-melt adhesive, phenolic resin adhesive, melamine resin adhesive, urea resin adhesive, resorcinol adhesive, and the like. There are methods to cure an adhesive for bonding: by heating an adhesive so as to cause the adhesive to melt as fluid, applying the melting adhesive, and thereafter cooling the applied adhesive; just by heating an adhesive; or the like.

### (Operation of Present Embodiment)

As shown in FIG. 3, in a state where the male component 21 of the shaft 3 is inserted into the female component 22, when the male component 21 is twisted in a peripheral direction (a direction indicated by void arrows in FIG. 3), a force is transmitted to the female spline part 22c of the female component 22 through the elastic member 23, and the shaft 3 is caused to rotate. A part of the elastic member 23 covering the male spline part 21c on a side where the male component 21 is caused to rotate (a right side of the male spline part 21c if the male component 21 is caused to rotate rightward) is compressively deformed. When an excessively large load not absorbable for the elastic member 21 is applied during the rotation, a part formed by the female spline part 22c and the groove 22e is bent like a cantilever to absorb an excessively large stress. The part formed by the female spline part 22c and the groove 22e has a shape elastically deformed even when a largest design stress during the rotation of the shaft 3 is applied thereto and restores its original shape when the stress disappears.

Furthermore, the axis of the male component 21 and/or the female component 22 is eccentric and/or deflected, the stress applied to the elastic member 23 is not uniform but an excessively large stress is applied to only a part thereof. When the axis is eccentric, in the case of the shaft structure shown in e.g. FIG. 3, the stresses applied to the elastic member 23 between the six female spline parts 22c and the six male spline parts 21c are different from each other. The parts formed by the female spline parts 22c and the grooves 22e of the female component 22 are deformed in a part of the elastic member 23 subjected to the excessively large stress so as to absorb parts of the stresses applied to the elastic member 23 in a distributed manner.

As a result, a service life of the elastic member 23 can be extended in comparison with the conventional elastic member. In other words, it is possible to provide the shaft structure 20 whose durability of the elastic member 23 does not easily deteriorate. Furthermore, when the elastic member 23 is formed of a fiber member impregnated with rubber or resins, it is possible to simultaneously solve the problems of suppressing an unpleasant sound called a tooth-hit noise generated between the outer peripheral part 21b of the male component 21 and the inner peripheral part 22a of the female component 22, and reducing an axial sliding resistance of the male component 21 and the female component 22, which are in a trade-off relation. Furthermore, since the axial sliding property of the male component 21 and the female component 22 is improved, it is not necessary to supply lubricant between the outer peripheral part 21b of the male component 21 and the inner peripheral part 22a of the female component 22 and to eliminate the lab and/or time necessary for supplying the lubricant. Furthermore, since the fiber member is impregnated with rubber or resins, it is possible to improve the resistance to wear of the surface of the fiber member generated between the fiber member and the outer peripheral part 21b of the male component 21 or between the fiber member and the inner peripheral part 22a of the female component 22.

### [Second Embodiment]

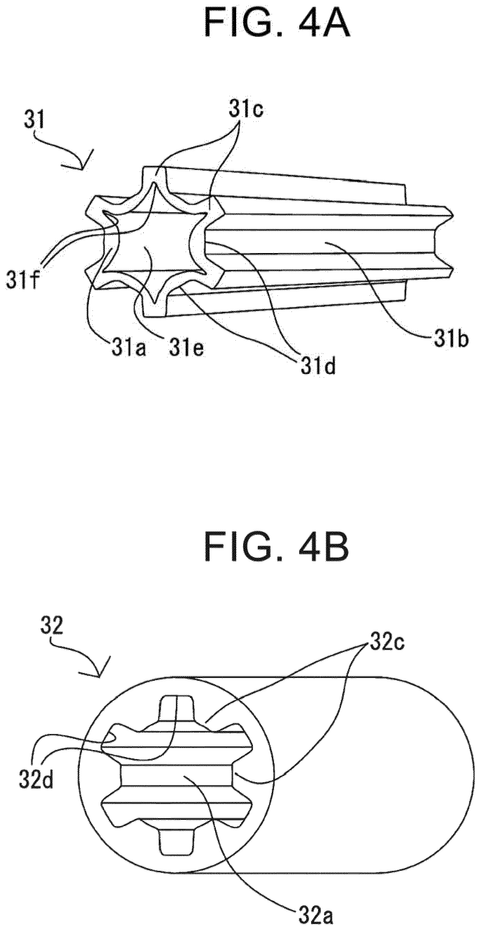

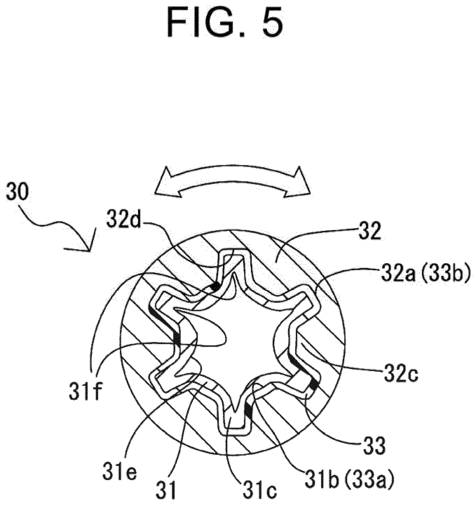

Hereinafter, a shaft structure (spline) as well as a male component (male spline shaft) and a female component (female spline shaft), both components making up the shaft structure, in a second embodiment of the present invention will be described with reference to FIGS. 4A to 4C, 5. FIGS. 4A to 4C depict an exploded perspective view showing an example of main parts of the shaft structure as a second embodiment of the present invention, of which: FIG. 4A shows an example of male component; FIG. 4B shows an example of female component; and FIG. 2C shows an example of elastic member interposed between the male component and the female component. FIG. 5 depicts a cross-sectional view of the shaft structure as a second embodiment according to the present invention. The explanations about the outlined structure of an electric power steering device as the second embodiment, which is the same as that of the electric power steering device as the first embodiment, will be omitted here.

### (Structure of shaft structure)

The shaft structure 30 in this embodiment is applied to e.g. a steering shaft similar to the steering shaft 3 described above (hereinafter, occasionally referred to as "shaft 3" for short).

The shaft structure 30 according to the present invention is installed on a shaft (hereinafter, referred merely to as "shaft") similar to the shaft 3 as a first embodiment. The male and female components capable of making a power-transmission are configured such that the male component is slidably inserted into the female component in an axial direction, thereby making up such a shaft structure 30. The shaft structure 30 includes a metallic male component 31, a metallic female component 32, and an elastic member 33 interposed between the male component 31 and the female component 32, where examples of metal used for the male component 31 and the female component 32 include iron, aluminum, stainless steel, and the like.

As shown in FIG. 4A, the male component 31 has a base shaft 31a having a hollow part. As shown in FIG. 4A, e.g. six male spline parts 31c arranged adjacent to each other with a predetermined gap along a peripheral direction of the base shaft part 31a and e.g. six male spline bottom parts 31d formed between each male spline parts 31c are formed on the outer peripheral part 31b of the base shaft 31 a. Furthermore, a substantially U or V-shaped cross-section groove 31f which is provided so as to enter from the hollow part side of the base shaft 31 a toward the distal end of the male spline part 31 c is formed on the inner peripheral part 31e of the base shaft 31 a. Here e.g. (1) when the male component 31 is twisted around the shaft and such a large load (torsional force) not fully absorbable for the elastic member 33 is applied to the elastic member 33 with the rotation of the shaft from an initial state where the male component 31 is inserted into the female component 32, a part of the load (torsional force) is applied to the male component 31 as a reactive force in a direction around the shaft. (2) When the male component 31 is twisted around the shaft and the axis of the male component 31 is eccentric and/or deflected, a force is transmitted to the female component 32 through the elastic member 33, and such a large load (pressure) not fully absorbable for the elastic member 33 is applied to the elastic member 33, a part of the load (pressure) is applied to the male component 31 as a reactive force. In this case, the male spline part 31c and the groove 31f of the metallic male component 31 are formed in such a shape that the male spline part 31c and the groove 31f can be bent within an elastic region of the used metal (they have flexibility), and a largest design stress is absorbable for the elastic region of the male spline part 31c. For example, in the present embodiment, the thickness of the male component 31 is controlled to a predetermined thickness and the male component 31 is formed as a tubular member having a plurality of substantially U or V-shaped cross-section grooves 31f that enter from the hollow part side of the base shaft 31a toward the distal end of the male spline part 31c. In this way, the male spline part 31 c and the groove 31f can be bent (elastically deformed) within the elastic region of the metal used as material of the male component 31.

As shown in FIG. 4B, the female component 32 has an inner peripheral part 32a which is formed in a substantially cylindrical form and in which the male component 31 can be inserted. That is, the same number (in the present embodiment, six) of female spline parts 32c as the number of male spline parts 31 c formed on the outer peripheral part 31b of the male component 31 are formed on the inner peripheral part 32a of the female component 32 with a predetermined gap in a peripheral direction of the female component 32. Furthermore, as shown in FIG. 4B, the same number (in the present embodiment, six) of female spline bottom parts 32d as the number of male spline bottom parts 31d are formed on the inner peripheral part 32a of the female component 32 between the adjacent female spline parts 32c. The female spline bottom part 32d is formed so that an axial cross-section thereof has a substantially U-shape.

The elastic member 33 can be formed using the same material as the elastic member 23 of the first embodiment. Furthermore, the elastic member 33 can be formed of a fiber member impregnated with rubber or resins similarly to the elastic member 23 of the first embodiment.

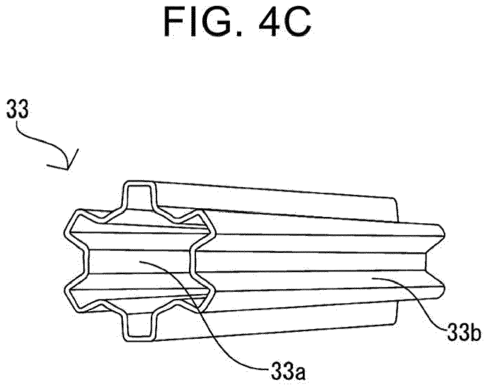

As shown in FIG. 4C, the elastic member 33 has an inner peripheral part 33a having substantially the same shape as the outer peripheral part 31b of the male component 31 and an outer peripheral part 33b having substantially the same shape as the inner peripheral part 32a of the female component 32. As a method of providing the elastic member 33 between the outer peripheral part 31b of the male component 31 and the inner peripheral part 32a of the female component 32, the elastic member 33 may be bonded to any one of the outer peripheral part 31b of the male component 31 and the inner peripheral part 32a of the female component 32. The adhesive used here may be the same as those used in the first embodiment.

### (Operation of Present Embodiment)

As shown in FIG. 5, in a state where the male component 31 of the shaft (not shown) is inserted into the female component 32, when the male component 31 is twisted in a peripheral direction (a direction indicated by void arrows in FIG. 5), a force is transmitted to the female component 32 through the elastic member 33 and the shaft is caused to rotate. Here, when such a load (torsional force) absorbable for the elastic member 33 is applied from the male component 31 to the elastic member 33, the elastic member 33 only is deformed. On the other hand, when such a large load (torsional force) that not fully absorbable for the elastic member 33 is applied to the elastic member 33, the elastic member 33 is deformed and then the male spline part 31c starts to be deformed around a lateral part of the male spline part 31c. In this case, the male spline part 31c can be bent (elastically deformed) around the lateral part of the male spline part 31 c within the elastic region of the metal used as material of the male component 31 and restores its original shape when the load (torsional force) disappears. As a result, the stress applied to the elastic member 33 can be reduced by the deformation of the male spline part 31c.

Furthermore, in a state where the male component 31 is inserted into the female component 32, when the male component 31 is caused to rotate around the shaft with the rotation of the shaft, and the axis of the male component 31 and/or the female component 32 is eccentric and/or deflected, a force is transmitted to the male component 31 and/or the female component 32 through the elastic member 33, and such a load (pressure) absorbable for the elastic member 33 is applied to the elastic member 33, the elastic member 33 only is deformed so as to absorb a part of the stress applied to the shaft and restores its original shape when the load (torsional force) disappears. On the other hand, when e.g. the male component 31 is twisted around the shaft with the rotation of the shaft, the axis of the male component 31 is eccentric and/or deflected, and such a large load (pressure) that not fully absorbable for the elastic member 33 is applied to the elastic member 33, the elastic member 33 is deformed, a part of the load (pressure) is transmitted to the female component 32, and a part of the load (pressure) is transmitted from a part of the outer peripheral part of the male component 31 as a reactive force. A specific example of the above-described transmission of the load (pressure) when the axis is eccentric or deflected will be described below. For example, a larger stress is applied to the male spline part 31 c in an eccentric direction than that applied to a male spline part 31 c in an opposite direction. In this case, although a large stress is also applied to the elastic member 33, the male spline part 31 c is elastically deformed to reduce the stress. The elastic member 33 and the male spline part 31c restore their original shape when the load (pressure) disappears. Furthermore, for example, when the axis of the male component 31 is deflected in relation to the axis of the female component 32 and a load (pressure) is transmitted to a spline crest part of the male spline part 31c present in a deflection direction of the axis of the male component 31, the load (pressure) is transmitted to the spline crest part of the male spline part 31 c in a distributed manner in a longitudinal direction. In this case, although a large stress is also applied to the elastic member 33, the male spline part 31c is bent (elastically deformed) within the elastic region of the material used as the material of the male component 31, in a distributed manner in a longitudinal direction around a part of the spline crest part of the male spline part 31c to which the load (pressure) has been transmitted, whereby the stress applied to the elastic member 33 is reduced. The elastic member 33 and the male spline part 31c restore their original shape when the load (pressure) disappears. Due to this, it is possible to reduce the stress applied to the elastic member 33 with deformation of the male spline part 31c. The same effect is obtained when the axis of the female component 32 is eccentric and/or deflected. Therefore, when the axis of the male component 31 and/or the female component 32 is eccentric and/or deflected and such a large load (pressure) that not fully absorbable for the elastic member 33 is applied to the elastic member 33, concentration of stress on the elastic member 33 can be distributed and reduced by the male spline part 31c using the elasticity of the metal used as the material of the male component 31. That is, the stress (deformation amount) applied to the elastic member 33 generated when the male component 31 is twisted in a peripheral direction and the axis of the male component 31 and/or the female component 32 is eccentric and/or deflected can be reduced by deformation of the male spline part 31 c.

As a result, the service life of the elastic member 33 can be extended as compared to the conventional elastic member. That is, it is possible to provide the shaft structure 30 in which the durability of the elastic member 33 does not easily deteriorate. Furthermore, when the elastic member 33 is formed of a fiber member impregnated with rubber or resins, it is possible to simultaneously solve the problems of suppressing an unpleasant sound called a tooth-hit noise generated between the outer peripheral part 31b of the male component 31 and the inner peripheral part 32a of the female component 32, and reducing an axial sliding resistance of the male component 31 and the female component 32, which are in a trade-off relation. Furthermore, since the axial sliding property of the male component 31 and the female component 32 is improved, it is not necessary to supply lubricant between the outer peripheral part 31b of the male component 31 and the inner peripheral part 32a of the female component 32 and to eliminate the lab and/or time necessary for supplying the lubricant. Furthermore, since the fiber member is impregnated with rubber or resins, it is possible to improve the resistance to wear of the surface of the fiber member generated between the fiber member and the outer peripheral part 31b of the male component 31 or between the fiber member and the inner peripheral part 32a of the female component 32.

### [Third Embodiment]

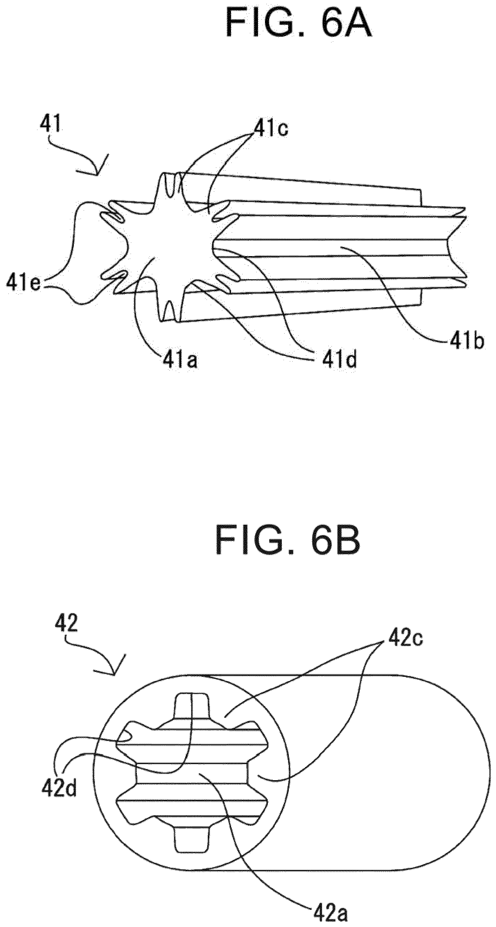

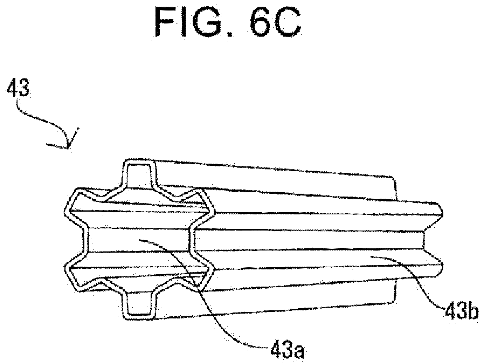

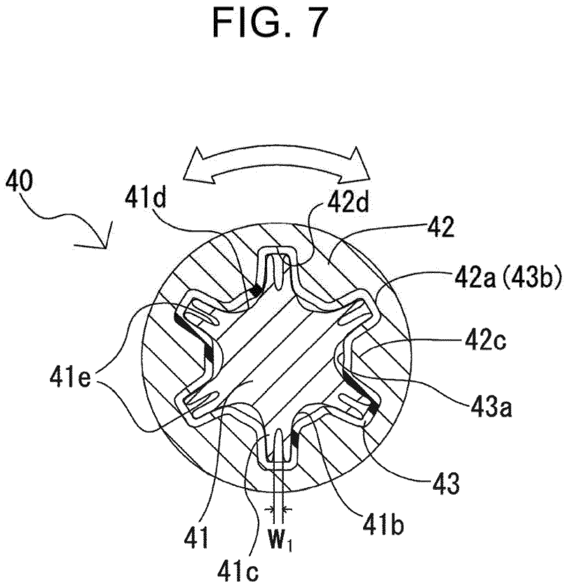

Hereinafter, a shaft structure (spline) as well as a male component (male spline shaft) and a female component (female spline shaft), both components making up the shaft structure, in a third embodiment of the present invention will be described with reference to FIGS. 6A to 6C, 7. FIGS. 6A to 6C depict an exploded perspective view showing an example of main parts of the shaft structure as a third embodiment of the present invention, of which: FIG. 6A shows an example of male component; FIG. 6B shows an example of female component; and FIG. 6C shows an example of elastic member interposed between the male component and the female component. FIG. 7 depicts a cross-sectional view of the shaft structure as a third embodiment according to the present invention. The explanations about the outlined structure of an electric power steering device as the third embodiment, which is the same as that of the electric power steering device as the first embodiment, will be omitted here.

### (Structure of shaft structure)

The shaft structure 40 in this embodiment is applied to e.g. a shaft similar to the shaft 3 as a first embodiment (hereinafter, referred merely to as "shaft").

The shaft structure 40 according to the present invention is installed on the shaft. The male and female components capable of making a power-transmission are configured such that the male component is slidably inserted into the female component in an axial direction, thereby making up such a shaft structure 40. The shaft structure 40 includes a metallic male component 41, a metallic female component 42, and an elastic member 43 interposed between the male component 41 and the female component 42.

As shown in FIG. 6A, the male component 41 has a base shaft 41 a. As shown in FIG. 6A, e.g. six male spline parts 41c which are arranged adjacent to each other with a predetermined gap along a peripheral direction of the base shaft part 41 a and, e.g. six male spline bottom parts 41d formed between the male spline parts 41 c are formed on the outer peripheral part 41b of the base shaft 41 a. Furthermore, a substantially U or V-shaped cross-section groove 41e which is provided so as to enter from the distal end of the male spline part 41c toward the central part in a radial direction of the male component 41 is formed on each male spline part 41c along an axial direction. Here e.g. (1) when the male component 41 is twisted around the shaft and such a large load (torsional force) that not fully absorbable for the elastic member 43 is applied to the elastic member 43 with the rotation of the shaft from an initial state where the male component 41 is inserted into the female component 42, a part of the load (torsional force) is applied to the male component 41 as a reactive force in a direction around the shaft. (2) When the male component 41 is twisted around the shaft and the axis of the male component 41 is eccentric and/or deflected, a force is transmitted to the female component 42 through the elastic member 43 from the initial state where the male component 41 is inserted into the female component 42, and such a large load (pressure) that not fully absorbable for the elastic member 43 is applied to the elastic member 43, a part of the load (pressure) is applied to the male component 41 as a reactive force. In this case, the male spline part 41c and the groove 41e of the metallic male component 41 are formed in such a shape that the male spline part 41c and the groove 41e can be bent within an elastic region of the used metal (they have flexibility), and a largest design stress absorbable within the elastic region of the male spline part 41c. For example, in the present embodiment, the thickness of a wall between the groove 41 e and the male spline bottom part 41 d of the male component 41 is controlled to a predetermined thickness and the substantially U or V-shaped cross-section groove 41e is formed so as to enter from the distal end of the male spline part 41c toward the central part in a radial direction of the male component 41. In this way, the male spline part 41c and the groove 41 e can be bent (elastically deformed) within the elastic region of the metal used as the material of the male component 41. In this case, the male spline part 41c is bent in a peripheral direction, and a width w1 (see FIG. 7) of the groove 41e is smaller than the width in the initial state.

As shown in FIG. 6B, the female component 42 is formed in a substantially cylindrical form and has an inner peripheral part 42a in which the male component 41 can be inserted. That is, the same number (in the present embodiment, six) of female spline parts 42c as the number of male spline parts 41c formed on the outer peripheral part 41b of the male component 41 are formed on the inner peripheral part 42a of the female component 42 with a predetermined gap in a peripheral direction of the female component 42. Furthermore, the same number (in the present embodiment, six) of female spline bottom parts 42d as the number of male spline bottom parts 41 d are formed on the inner peripheral part 42a of the female component 42 between the adjacent female spline parts 42c. The female spline bottom part 42d is formed so that an axial cross-section thereof has a substantially U-shape.

The elastic member 43 can be formed using the same material as the elastic member 23 of the first embodiment. Furthermore, the elastic member 43 can be formed of a fiber member impregnated with rubber or resins similarly to the elastic member 23 of the first embodiment.

As shown in FIG. 6C, the elastic member 43 has an inner peripheral part 43a with insert capability, having substantially the same shape as the outer peripheral part 41b of the male component 41 and an outer peripheral part 43b having substantially the same shape as the inner peripheral part 42a of the female component 42. In the present embodiment, the elastic member 43 is bonded to the inner peripheral part 42a of the female component 42. The adhesive used here may be the same as those used in the first embodiment.

### (Operation of Present Embodiment)

As shown in FIG. 7, in a state where the male component 41 of the shaft (not shown) is inserted into the female component 42, when the male component 41 is twisted in a peripheral direction (a direction indicated by void arrows in FIG. 7), a force is transmitted to the female component 42 through the elastic member 43 and the shaft is caused to rotate. Here, when such a load (torsional force) absorbable for the elastic member 43 is applied from the male component 41 to the elastic member 43, the elastic member 43 only is deformed to absorb a part of the stress applied to the shaft and restores its original shape when the load (torsional force) disappears. On the other hand, when such a large load (torsional force) that not fully absorbable for the elastic member 43 is applied to the elastic member 43, the elastic member 43 is deformed, the load (torsional force) is applied as a reactive force, and the male spline part 41c starts to be deformed around a lateral part of the male spline part 41c. In this case, the male spline part 41c can be bent (elastically deformed so that the width w1 in FIG. 7 decreases from the initial state) in a peripheral direction around the lateral part of the male spline part 41 c within the elastic region of the metal used as the material of the male spline part 41c and restores its original shape (the width w2 returns to the initial state of FIG. 7) when the load (torsional force) disappears. As a result, the stress applied to the elastic member 43 can be reduced by deformation of the male spline part 41 c. Therefore, when such a large load (torsional force) that not fully absorbable for the elastic member 43 is applied to the elastic member 43 with the rotation of the shaft, concentration of stress on the elastic member 43 can be distributed and reduced by the male spline part 41 c using the elasticity of the metal used as the material of the male component 41.

Furthermore, when the male component 41 is caused to rotate around the shaft with the rotation of the shaft from the initial state where the male component 41 is inserted into the female component 42, and the axis of the male component 41 and/or the female component 42 is eccentric and/or deflected, force is transmitted to the male component 41 and/or the female component 42 through the elastic member 43, and such a load (pressure) absorbable for the elastic member 43 is applied to the elastic member 43, the elastic member 43 only is deformed to absorb a part of the stress applied to the shaft and restores its original shape when the load (torsional force) disappears. On the other hand, for example, when the male component 41 is twisted abound the shaft with the rotation of the shaft from the initial state where the male component 41 is inserted into the female component 42, the axis of the male component 41 is eccentric and/or deflected, and such a large load (pressure) that not fully absorbable for the elastic member 43 is applied to the elastic member 43, the elastic member 43 is deformed, a part of the load (pressure) is transmitted to the female component 42, and a part of the load (pressure) is transmitted from a part of the outer peripheral part of the male component 41 as a reactive force. Here, a specific example of the above-described transmission of the load (pressure) when the axis is eccentric or deflected will be described below. For example, a larger stress is applied to the male spline part 41c in an eccentric direction than that applied to a male spline part 41 c in an opposite direction. In this case, although a large stress is also applied to the elastic member 43, the male spline part 41c is elastically deformed to reduce the stress. The elastic member 43 and the male spline part 41c restore their original shape when the load (pressure) disappears. Furthermore, for example, when the axis of the male component 41 is deflected in relation to the axis of the female component 42 and a load (pressure) is transmitted to a spline crest part of the male spline part 41c present in a deflection direction of the axis of the male component 41, the load (pressure) is transmitted to the spline crest part of the male spline part 41 c in a distributed manner in a longitudinal direction. In this case, although a large stress is also applied to the elastic member 43, the male spline part 41 c is bent (elastically deformed) within the elastic region of the material used as the material of the male component 41 in a distributed manner in a longitudinal direction around a part of the spline crest part of the male spline part 41 c to which the load (pressure) has been transmitted, whereby the stress applied to the elastic member 43 is reduced. The elastic member 43 and the male spline part 41c restore their original shape when the load (pressure) disappears. Due to this, it is possible to reduce the stress applied to the elastic member 43 with deformation of the male spline part 41c. The same effect is obtained when the axis of the female component 42 is eccentric and/or deflected. Therefore, when the axis of the male component 41 and/or the female component 42 is eccentric and/or deflected and such a large load (pressure) that not fully absorbable for the elastic member 43 is applied to the elastic member 43, concentration of stress on the elastic member 43 can be distributed and reduced by the male spline part 41 c using the elasticity of the metal used as the material of the male component 41. That is, the stress (deformation amount) applied to the elastic member 43 generated when the male component 41 is twisted in a peripheral direction and the axis of the male component 41 and/or the female component 42 is eccentric and/or deflected can be reduced by deformation of the male spline part 41 c.

As a result, the service life of the elastic member 43 can be extended as compared to the conventional elastic member. That is, it is possible to provide the shaft structure 40 in which the durability of the elastic member 43 does not easily deteriorate. Furthermore, when the elastic member 43 is formed of a fiber member impregnated with rubber or resins, it is possible to simultaneously solve the problems of suppressing an unpleasant sound called a tooth-hit noise generated between the outer peripheral part 41b of the male component 41 and the inner peripheral part 42a of the female component 42, and reducing an axial sliding resistance of the male component 41 and the female component 42, which are in a trade-off relation. Furthermore, since the axial sliding property of the male component 41 and the female component 42 is improved, it is not necessary to supply lubricant between the outer peripheral part 41b of the male component 41 and the inner peripheral part 42a of the female component 42 and to eliminate the lab and/or time necessary for supplying the lubricant. Furthermore, since the fiber member is impregnated with rubber or resins, it is possible to improve the resistance to wear of the surface of the fiber member generated between the fiber member and the outer peripheral part 41b of the male component 41 or between the fiber member and the inner peripheral part 42a of the female component 42.

### [Fourth Embodiment]

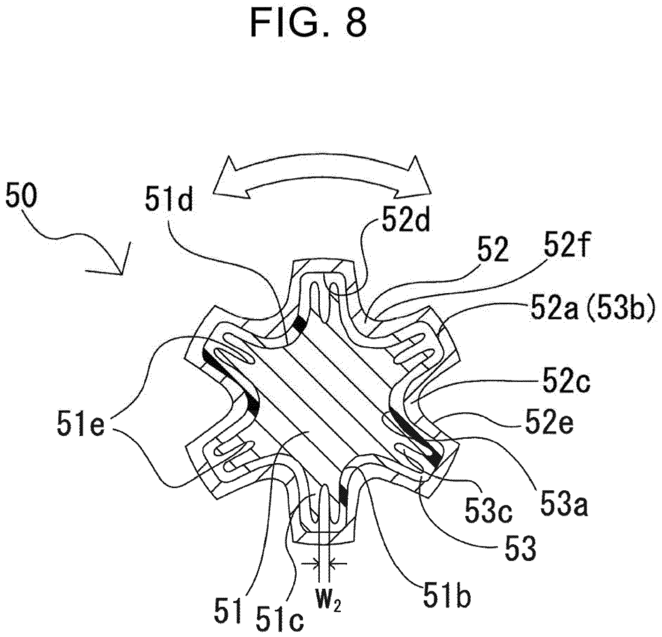

Hereinafter, a shaft structure (spline) as well as a male component (male spline shaft) and a female component (female spline shaft), both components making up the shaft structure, in a fourth embodiment of the present invention will be described with reference to FIG. 8. FIG. 8 depicts a cross-sectional view of the shaft structure as a fourth embodiment according to the present invention. The explanations about the outlined structure of an electric power steering device as the fourth embodiment, which is the same as that of the electric power steering device as the first embodiment, will be omitted here. Furthermore, the explanations about the parts, which are the same as those of the third embodiment, will occasionally be omitted here.

### (Structure of shaft structure)

The shaft structure 50 in this embodiment is applied to e.g. a shaft similar to the shaft 3 as a first embodiment (hereinafter, referred merely to as "shaft").

The shaft structure 50 according to the present invention is installed on the shaft. The male and female components capable of making a power-transmission are configured such that the male component is slidably inserted into the female component in an axial direction, thereby making up such a shaft structure 50. The shaft structure 50 includes a metallic male component 51, a metallic female component 52, and an elastic member 53 interposed between the male component 51 and the female component 52.

As shown in FIG. 8, the male component 51 has the same shape as the male component 41 of the third embodiment. Here e.g. (1) when the male component 51 is twisted around the shaft and such a large load (torsional force) that not fully absorbable for the elastic member 53 is applied to the elastic member 53 with the rotation of the shaft from an initial state where the male component 51 is inserted into the female component 52, a part of the load (torsional force) is applied to the male component 51 as a reactive force in a direction around the shaft. (2) When the male component 51 is twisted around the shaft and the axis of the male component 51 is eccentric and/or deflected, a force is transmitted to the female component 52 through the elastic member 53 from the initial state where the male component 51 is inserted into the female component 52, and such a large load (pressure) that not fully absorbable for the elastic member 53 is applied to the elastic member 53, a part of the load (pressure) is applied to the male component 51 as a reactive force. In this case, the male spline part 51c and the groove 51e of the metallic male component 51 are formed in such a shape that the male spline part 51 c and the groove 51e can be bent within an elastic region of the used metal (they have flexibility), and a largest design stress absorbable within the elastic region of the male spline part 51c. For example, in the present embodiment, the thickness of a wall between the groove 51e and the male spline bottom part 51 d of the male component 51 is controlled to a predetermined thickness and the substantially U or V-shaped cross-section groove 51e is formed so as to enter from the distal end of the male spline part 51c toward the central part in a radial direction of the male component 51. In this way, the male spline part 51c and the groove 51e can be bent (elastically deformed) within the elastic region of the metal used as the material of the male component 51. In this case, the male spline part 51c is bent in a peripheral direction, and a width w2 (see FIG. 8) of the groove 51e is smaller than the width in the initial state.

As shown in FIG. 8, the female component 52 has an inner peripheral part 52a which is formed in such a shape that substantially matches the outer peripheral part 53b of the elastic member 53 and in which the male component 51 can be inserted. That is, the same number (in the present embodiment, six) of female spline parts 52c as the number of male spline parts 51c formed on the outer peripheral part 51b of the male component 51 are formed on the inner peripheral part 52a of the female component 52 with a predetermined gap in a peripheral direction of the female component 52. Furthermore, the same number (in the present embodiment, six) of female spline bottom parts 52d as the number of male spline bottom parts 51 d are formed on the inner peripheral part 52a of the female component 52 between the adjacent female spline parts 52c. The female spline bottom part 52d is formed so that an axial cross-section thereof has a substantially U-shape. Furthermore, the female component 52 has an outer peripheral part 52e having a shape substantially similar to the inner peripheral part 52a. Here e.g. (1) when the male component 51 is twisted around the shaft and such a large load (torsional force) that not fully absorbable for the elastic member 53 is applied to the elastic member 53 with the rotation of the shaft from an initial state where the male component 51 is inserted into the female component 52, a part of the load (torsional force) is applied to the male component 51 in a direction around the shaft. (2) When the male component 51 is twisted around the shaft and the axis of the male component 51 is eccentric and/or deflected, a force is transmitted to the female component 52 through the elastic member 53 from the initial state where the male component 51 is inserted into the female component 52, and such a large load (pressure) that not fully absorbable for the elastic member 53 is applied to the elastic member 53, a part of the load (pressure) is applied to the inner peripheral part 52a of the female component 52 present in an eccentric or deflection direction of the male component 51. In this case, the female spline part 52c and the groove 52f of the metallic female component 52 are formed in such a shape that the female spline part 52c and the groove 52f described later can be bent within an elastic region of the used metal (they have flexibility), and a largest design stress absorbable within the elastic region of the female spline part 52c. For example, in the present embodiment, the thickness of the female component 52 is controlled to a predetermined thickness and the female component 52 is formed so as to have the outer peripheral part 52b (specifically have the groove 52f) having a shape substantially similar to the outer peripheral part 53b of the elastic member 53. In this way, the male spline part 51c and the groove 51f can be bent (elastically deformed) within the elastic region of the metal used as the material of the female component 52.

As shown in FIG. 8, the elastic member 53 has an inner peripheral part 53a that covers the entire outer peripheral part 51b of the male component 51 and an outer peripheral part 53b having substantially the same shape as the inner peripheral part 52a of the female component 52. The inner peripheral part 53a has a plurality of projections 53c formed so as to fit with the grooves 51e of the male component 51. In the present embodiment, although the elastic member 53 is bonded to the inner peripheral part 52a of the female component 52, the elastic member 53 may be bonded to the outer peripheral part 51b of the male component 51. The adhesive used here may be the same as those used in the first embodiment.

Furthermore, the elastic member 53 can be formed using the same material as the elastic member 23 of the first embodiment. Furthermore, the elastic member 53 can be formed of a fiber member impregnated with rubber or resins similarly to the elastic member 23 of the first embodiment.

### (Operation of Present Embodiment)

As shown in FIG. 8, in a state where the male component 51 of the shaft (not shown) is inserted into the female component 52, when the male component 51 is twisted in a peripheral direction (the direction indicated by void arrows in FIG. 8), a force is transmitted to the female component 52 through the elastic member 53 and the shaft is caused to rotate. Here, when such a load (torsional force) absorbable for the elastic member 53 is applied from the male component 51 to the elastic member 53, the elastic member 53 only is deformed to absorb a part of the stress applied to the shaft and restores its original shape when the load (torsional force) disappears. On the other hand, when such a large load (torsional force) that not fully absorbable for the elastic member 53 is applied to the elastic member 53, the elastic member 53 is deformed, the load (torsional force) is transmitted to the female component 52, the female spline part 52c starts to be deformed around the lateral part of the female spline part 52c, and the load (torsional force) transmitted to the female component 52 is applied as a reactive force, and the male spline part 51c starts to be deformed around a lateral part of the male spline part 51c. In this case, the female spline part 52c can be bent (elastically deformed) around the lateral part of the female spline part 52c within the elastic region of the metal used as the material of the female component 52 and restores its original shape when the load (torsional force) disappears. Furthermore, in this case, the male spline part 51c can be bent (elastically deformed so that the width w2 in FIG. 8 decreases from the initial state) in a peripheral direction around the lateral part of the male spline part 51 c within the elastic region of the metal used as the material of the male component 51 and restores its original shape (the width w2 returns to the initial state of FIG. 8) when the load (torsional force) disappears. As a result, the stress applied to the elastic member 53 can be reduced by deformation of the male spline part 51c and the female spline part 52c. Therefore, when such a large load (torsional force) that not fully absorbable for the elastic member 53 is applied to the elastic member 53 with the rotation of the shaft, concentration of stress on the elastic member 53 can be distributed and reduced by the male spline part 51c and the female spline part 52c using the elasticity of the metal used as the material of the male component 51 and the elasticity of the metal as the material of the female component 52.

Furthermore, when the male component 51 is caused to rotate around the shaft with the rotation of the shaft from the initial state where the male component 51 is inserted into the female component 52, and the axis of the male component 51 and/or the female component 52 is eccentric and/or deflected, force is transmitted to the male component 51 and/or the female component 52 through the elastic member 53, and such a load (pressure) absorbable for the elastic member 53 is applied to the elastic member 53, the elastic member 53 only is deformed to absorb a part of the stress applied to the shaft and restores its original shape when the load (torsional force) disappears. On the other hand, for example, when the male component 51 is twisted abound the shaft from the initial state where the male component 51 is inserted into the female component 52, and the axis of the male component 51 is eccentric, and such a large load (pressure) that not fully absorbable for the elastic member 53 is applied to the elastic member 53, the elastic member 53 is deformed, a part of the load (pressure) is transmitted from a part (e.g. a certain female spline part 52c present in an eccentric direction of the axis of the male component 51) of the inner peripheral part 52a of the female component 52, the load (pressure) transmitted to the female component 52 is applied as a reactive force, and a part of the load (pressure) is transmitted from a part (e.g. a certain male spline part 51c present in the eccentric direction of the axis of the male component 51) of the outer peripheral part 51b of the male component 51. In this case, a part (e.g. a certain female spline part 52c present in an eccentric direction of the axis of the male component 51) of the inner peripheral part 52a of the female component 52 can be bent (elastically deformed) around a part (e.g. a certain female spline part 52c present in an eccentric direction of the axis of the male component 51) of the inner peripheral part 52a of the female component 52 to which the load (pressure) has been transmitted) within the elastic region of the material used as the material of the female component 52 and restores its original shape when the load (pressure) disappears. Furthermore, a part (e.g. a certain male spline part 51c present in an eccentric direction of the axis of the male component 51) of the outer peripheral part 51b of the male component 51 can be bent (elastically deformed so that the width w2 in FIG. 8 decreases from the initial state) around a part (e.g. a lateral part of a certain male spline part 51c present in an eccentric direction of the axis of the male component 51) of the outer peripheral part 51b of the male component 51 to which the load (pressure) has been transmitted within the elastic region of the material used as the material of the male component 51 and restores its original shape (the width w2 in FIG. 8 returns to the initial state) when the load (pressure) disappears. Therefore, a larger stress is applied to the male spline part 51c and the female spline part 52c present in an eccentric direction than that applied to a male spline part 51c and a female spline part 52c present in an opposite direction of the male spline part 51 c and the female spline part 52c. In this case, although a large stress is applied to the elastic member 53, the stress is reduced when the male spline part 51c and the female spline part 52c are elastically deformed. Furthermore, for example, when the axis of the male component 51 is deflected in relation to the axis of the female component 52 and a load (pressure) is transmitted to the spline crest part of the male spline part 51c present in a deflection direction of the axis of the male component 51, the load (pressure) is transmitted in a longitudinal direction to the spline crest part of the male spline part 51c in a distributed manner. In this case, although a large stress is also applied to the elastic member 53, the male spline part 51c is bent (elastically deformed) in a longitudinal direction in a distributed manner around a part of the spline crest part of the male spline part 51c to which the load (pressure) has been transmitted within the elastic region of the material used as the material of the male component 51, whereby the stress applied to the elastic member 53 is reduced. The elastic member 53 and the male spline part 51c restore their original shape when the above-described load (pressure) disappears. Furthermore, in this case, for example, when the axis of the male component 51 is deflected in relation to the axis of the female component 52 and a load (pressure) is transmitted to the female spline part 52c present in a deflection direction of the axis of the male component 51, the load (pressure) is transmitted in a longitudinal direction in a distributed manner to the spline crest part of the female spline part 52c. In this case, although a large stress is also applied to the elastic member 53, the female spline part 52c is bent (elastically deformed) in a longitudinal direction in a distributed manner around a part of the spline crest part of the female spline part 52c of the female component 52 to which the load (pressure) has been transmitted within the elastic region of the material used as the material of the female component 52 whereby the stress applied to the elastic member 53 is reduced. The elastic member 53 and the male spline part 51c restore their original shape when the above-described load (pressure) disappears. Due to this, the stress can be distributed and reduced by the elastic member 53, the male spline part 51c, and the female spline part 52c. The same effect is obtained when the axis of the female component 52 is eccentric and/or deflected. Therefore, when the axis of the male component 51 and/or the female component 52 is eccentric and/or deflected and such a large load (pressure) that not fully absorbable for the elastic member 53 is applied to the elastic member 53, concentration of stress on the elastic member 53 can be distributed and reduced by the male spline part 51c and the female spline part 52c using the elasticity of the metal used as the material of the male component 51 and the elasticity of the metal used as the material of the female component 52. That is, the stress (deformation amount) applied to the elastic member 53 generated when the male component is twisted in a peripheral direction and the axis of the male component and/or the female component is eccentric and/or deflected absorbable for the male spline part 51c and the female spline part 52c in a distributed manner.

As a result, the service life of the elastic member 53 can be extended as compared to the conventional elastic member. That is, it is possible to provide the shaft structure 50 in which the durability of the elastic member 53 does not easily deteriorate. Furthermore, when the elastic member 53 is formed of a fiber member impregnated with rubber or resins, it is possible to simultaneously solve the problem of suppressing an unpleasant sound called a tooth-hit noise generated between the outer peripheral part 51b of the male component 51 and the inner peripheral part 52a of the female component 52, and to reducing an axial sliding resistance of the male component 51 and the female component 52, which are in a trade-off relation. Furthermore, since the axial sliding property of the male component 51 and the female component 52 is improved, it is not necessary to supply lubricant between the outer peripheral part 51b of the male component 51 and the inner peripheral part 52a of the female component 52 and to eliminate the lab and/or time necessary for supplying the lubricant. Furthermore, since the fiber member is impregnated with rubber or resins, it is possible to improve the resistance to wear of the surface of the fiber member generated between the fiber member and the outer peripheral part 51b of the male component 51 or between the fiber member and the inner peripheral part 52a of the female component 52.

Specific constructions according to the present invention are not limited to embodiments described above with reference to the drawings. The scope of the present invention is not encompassed by the above explanations of embodiments but particularly pointed out by the claims, and the equivalents of the claim recitations as well as all the modifications within the scope of the claims fall within the scope of the present invention.

More specifically, in each embodiment, there is described an example of applying the shaft structure as this embodiment to a vehicle steering shaft; however, the present invention is not limited to this but may be applied to shafts used in various industrial machines.

Furthermore, in each embodiment, there is described the use of a metallic male component and a metallic female component; however, the present invention is not limited to this but the male component and the female component thereof may be formed of arbitrary material such as resins as long as the material has an elastic region.

**(Reference Numerals)**

| | | | | |
|---|---|---|---|---|
| 1 | Electric power steering device | | 2 | Steering wheel |
| 3 | Steering shaft | | 4 | Pinion gear |
| 5 | Rack gear | | 6 | Rack shaft |
| 7 | Tie rod | | 8 | Wheel |
| 9 | Input shaft | | 10 | Output shaft |
| 11 | Torsion bar | | 12 | Torque sensor |
| 13 | Control unit | | 14 | Driver |
| 15 | Electric motor | | 17 | Speed reducer |
| 18 | Converter | | | |
| 20, 30, 40, 50 | | Shaft structure | | |
| 21, 31, 41, 51 | | Male component | | |
| 21a, 31a, 41a, 1a | | Base shaft part | | |
| 21b, 22b, 23b, 31b, 33b, 41 b, 43b, 51b, 52b, 52e, 53b | | | | Outer peripheral part |
| 21c, 31c, 41c, 51c | | Male spline part | | |
| 21d, 31d, 41d, 51D | | Male spline bottom part | | |
| 22, 32, 42, 52 | | Female component | | |
| 22a, 23a, 31e, 32a, 33a, 42a, 43a, 52a, 53a | | | | Inner peripheral part |
| 22c, 32c, 42c, 52c | | Female spline part | | |
| 22d, 32d, 42d, 52d | | Female spline bottom part | | |
| 22e, 31f, 41e, 51e, 52f | | Groove | | |
| 23, 33, 43, 53 | | Elastic member | | |
| 53c | | Projection | | |

## Claims

1. A shaft structure installed in a shaft capable of making a power-transmission, the shaft structure comprising:
a male component having a plurality of male spline parts and a plurality of male spline bottom parts formed on an outer peripheral part thereof;
a female component having a plurality of female spline parts and a plurality of female spline bottom parts formed on an inner peripheral part thereof, the female component configured to allow the male component to be slidably inserted thereinto in an axial direction thereby making up said shaft structure; and
an elastic member arranged on the male or female component such that a surface of the outer or inner peripheral part of the male or female component, respectively, is covered with the elastic member, wherein
the female component has a plurality of substantially U or V-shaped cross-section grooves each formed on an outer peripheral part as opposed to each of the plurality of female spline parts, and
a shape defined by each of the plurality of female spline parts and each of the plurality of grooves is configured such that, when the male or female component is twisted with respect to each other and a stress is applied to a female spline part as each of the plurality of female spline parts in a direction around the shaft, the female spline part could be elastically deformed as well as absorb a maximum design stress within an elastic region of the female spline part.

2. A female component installed in a shaft capable of making a power-transmission, the female component comprising:
a plurality of female spline parts formed on an inner peripheral part thereof;
a plurality of female spline bottom parts formed on an inner peripheral part thereof; and
a plurality of substantially U or V-shaped cross-section grooves each formed on an outer peripheral part thereof as opposed to each interval between adjacent male spline parts out of a plurality of male spline parts formed on an outer peripheral part of a male component in an initial state where the male component is inserted thereinto, thereby making up a shaft structure, wherein
a shape defined by each of the plurality of female spline parts thereof and each of the plurality of grooves is configured such that,
when the male component or said female component is twisted with respect to each other and a stress is applied to a female spline part as each of the plurality of female spline parts thereof in a direction around the shaft,
through an elastic member arranged so as to cover a surface of the outer peripheral part of the plurality of male spline parts and a plurality of male spline bottom parts formed along with the plurality of male spline parts, or a surface of the inner peripheral part of the plurality of female spline parts thereof and the plurality of female spline bottom parts thereof,
the female spline part could be elastically deformed as well as absorb a maximum design stress within an elastic region of the female spline part.

3. A shaft structure installed in a shaft capable of making a power-transmission, the shaft structure comprising:
a male component having a plurality of male spline parts and a plurality of male spline bottom parts formed on an outer peripheral part thereof, and having a hollow part formed therein;
a female component having a plurality of female spline parts and a plurality of female spline bottom parts formed on an inner peripheral part thereof, the female component configured to allow the male component to be slidably inserted thereinto in an axial direction thereby making up said shaft structure; and
an elastic member arranged on the male or female component such that a surface of the outer or inner peripheral part of the male or female component, respectively, is covered with the elastic member, wherein
the male component has, in the hollow part, a plurality of substantially U or V-shaped cross-section grooves each shaped so as to converge from a hollow part side toward a spline crest part of each of the plurality of male spline parts, and
a shape defined by each of the plurality of male spline parts and each of the plurality of grooves is configured such that, when the male or female component is twisted with respect to each other and a stress is applied to a male spline part as each of the plurality of male spline parts in a direction around the shaft, the male spline part could be elastically deformed as well as absorb a maximum design stress within an elastic region of the male spline part.

4. A male component installed in a shaft capable of making a power-transmission, the male component comprising:
a plurality of male spline parts formed on an outer peripheral part thereof;
a plurality of male spline bottom parts formed on an outer peripheral part thereof;
a hollow part formed therein; and
a plurality of substantially U or V-shaped cross-section grooves each shaped so as to converge from a hollow part side toward a spline crest part of each of the plurality of male spline parts, in the hollow part, thereof, wherein
a shape defined by each of the plurality of male spline parts thereof and each of the plurality of grooves is configured such that,
when said male component or a female component is twisted with respect to each other from an initial state where said male component is inserted into the female component, thereby making up a shaft structure, and a stress is applied to a male spline part as each of the plurality of male spline parts thereof in a direction around the shaft,
through an elastic member arranged so as to cover a surface of the outer peripheral part of the plurality of male spline parts thereof and the plurality of male spline bottom parts thereof, or a surface of an inner peripheral part of a plurality of female spline parts of the female component and a plurality of female spline bottom parts formed along with the plurality of female spline parts,
the male spline part could be elastically deformed as well as absorb a maximum design stress within an elastic region of the male spline part.

5. A shaft structure installed in a shaft capable of making a power-transmission, the shaft structure comprising:
a male component having a plurality of male spline parts and a plurality of male spline bottom parts formed on an outer peripheral part thereof;
a female component having a plurality of female spline parts and a plurality of female spline bottom parts formed on an inner peripheral part thereof, the female component configured to allow the male component to be slidably inserted thereinto in a radial direction thereby making up said shaft structure; and
an elastic member arranged on the male or female component such that a surface of the outer or inner peripheral part of the male or female component, respectively, is covered with the elastic member, wherein
the male component has a plurality of substantially U or V-shaped cross-section grooves each shaped so as to converge from a spline crest part toward a central part in a radial direction of each of the plurality of male spline parts, and
a shape defined by each of the plurality of male spline parts and each of the plurality of grooves is configured such that, when the male or female component is twisted with respect to each other and a stress is applied to a male spline part as each of the plurality of male spline parts in a direction around the shaft, the male spline part could be elastically deformed as well as absorb a maximum design stress within an elastic region of the male spline part.

6. A male component installed in a shaft capable of making a power-transmission, the male component comprising:
a plurality of male spline parts formed on an outer peripheral part thereof;
a plurality of male spline bottom parts formed on an outer peripheral part thereof; and
a plurality of substantially U or V-shaped cross-section grooves each shaped so as to converge from a spline crest part to a central part in a radial direction of each of the plurality of male spline parts, in the hollow part, thereof, wherein
a shape defined by each of the plurality of male spline parts thereof and each of the plurality of grooves is configured such that,
when said male component or a female component is twisted with respect to each other from an initial state where said male component is inserted into the female component, thereby making up a shaft structure, and a stress is applied to a male spline part as each of the plurality of male spline parts thereof in a direction around the shaft,
through an elastic member arranged so as to cover a surface of the outer peripheral part of the plurality of male spline parts thereof and the plurality of male spline bottom parts thereof, or a surface of an inner peripheral part of a plurality of female spline parts of the female component and a plurality of female spline bottom parts formed along with the plurality of female spline parts,
the male spline part could be elastically deformed as well as absorb a maximum design stress within an elastic region of the male spline part.
